# EUROPEAN PATENT SPECIFICATION

(11) **EP 3 789 103 B1**
(45) Date of publication and mention of the grant of the patent: **13.04.2022**
(21) Application number: 19195300.9
(22) Date of filing: 04.09.2019
(51) Int. Cl.: B01D 53/26, B01D 53/04, H01F 27/14

(54) **A BREATHER DEVICE FOR DEHUMIDIFYING AIR TO BE SUPPLIED TO AN EXPANSION VESSEL OF A POWER ELECTRICAL APPARATUS**
ENTLÜFTERVORRICHTUNG ZUR TROCKNUNG VON LUFT WELCHE IN EINEN ENTSPANNUNGSBEHÄLTER EINER ELEKTRISCHE LEISTUNGSEINRICHTUNG GESPEIST WIRD
DISPOSITIF DE RENIFLARD POUR DÉSHUMIDIFIER DE L'AIR FOURNI À UN RÉSERVOIR D'EXPANSION D'UN APPAREIL ÉLECTRIQUE

(43) Date of publication of application: 10.03.2021
(73) Proprietor: COMEM S.p.A., 36054 Montebello Vicentino (VI) (IT)
(72) Inventor: Ugolin, Gianmaria, 36054 Montebello Vicentino (VI) (IT); Carollo, Carlo, 36054 Montebello Vicentino (VI) (IT); Nucci, Francesca, 36054 Montebello Vicentino (VI) (IT)
(74) Representative: Burchielli, Riccardo

(56) References cited:
- EP-A1- 2 514 511
- CN-A- 109 036 792
- JP-A- S60 198 710
- US-A1- 2018 185 781

## Description

The present invention relates to a breather device for a power electrical apparatus intended for use in electric power transmission and distribution installations, such as a power transformer, a load tap changer, a choke, and the like.

As is known, breather devices are generally used in connection with power electrical apparatuses equipped with expansion vessels. These expansion vessels (or conservators in the case of power transformers) have the function of compensating for the unavoidable volume changes of insulating liquid (e.g. insulating oil) used in such electrical apparatuses, which are mostly due to temperature fluctuations.

In general, an expansion vessel has its internal volume in fluid-dynamic communication with the tank of the power electrical apparatus and with the external atmosphere in such a way to be partially filled with insulating liquid and airthat, in some cases, may be in direct contact. When it expands, the insulating liquid partially fills the expansion vessel and pushes air out of this latter whereas, when it reduces its overall volume, the insulating liquid retracts from the expansion vessel and air is sucked from the external environment.

In order to prevent deterioration of dielectric characteristics of the insulating fluid (e.g. the reduction of the breakdown voltage) due to contact with humid air, a power electrical apparatus is normally equipped with a breather device operatively coupled with the expansion vessel in such way that air expelled from or breathed in the expansion vessel is forced to pass through said breather device.

A breather device is normally filled with air-drying salts suitable to absorb moisture from air passing therethrough. In this way, accumulation of moisture in the expansion vessel and, more in general, in the tank of the power electrical apparatus is avoided or remarkably reduced.

As is known, after a given number of breathing cycles, air-drying salts contained in a breather device may reach a saturation condition, in which they are no more capable of effectively absorbing moisture from circulating air. This entails that the breather device cannot carry out its functionalities anymore.

According to most recent solutions of the state of the art, breather devices are equipped with suitable heaters that can be activated to carry out a heating regeneration process of the air-drying salts and restore their air-drying capabilities.

Although breather devices of this type generally perform their functionalities in a satisfying way, they still have some aspect to improve, particularly for what concerning the regeneration process of air-drying salts, which is still rather inefficient and time consuming (e.g. many hours).

Some tries to overcome or mitigate this issue have been given over the years. However, the proposed technical solutions have shown to be complex and expensive to implement at industrial level.

Moreover, breather devices for power electrical apparatuses having the technical features of the preamble of the appended claim 1 are known for example from US2018/185781A1, EP2514511A1, JPS60198710A and CN109036792A.

The main aim of the present invention is to provide a breather device for power electrical apparatuses, which allows solving or mitigating the technical problems evidenced above. Within this aim, an object of the present invention is to provide a breather device, in which the regeneration process of air-drying salts is carried out in an effective way and it needs a shorter time with respect to currently available solutions.

A further object of the present invention is to provide breather device that has a compact structure and that can be industrially realized at competitive costs.

These aim and objects are achieved by a breather device for power electrical apparatuses, according to the following claim 1 and the related dependent claims.

In a general definition, the breather device, according to the invention, comprises:
- an air demoisturizer unit including one or more tanks. Each tank has an internal volume accommodating a regenerable moisture absorbing substance and a heater for regenerating said moisture absorbing substance. Each tank further has at least a first opening configured to put the internal volume of said tank in fluid-dynamic communication with the external environment and at least a second opening configured to allow a flow of air to exit from the internal volume of said tank towards another section of said breather device;

According to the invention, each tank of the air demoisturizer unit comprises at least a third opening in fluid-dynamic communication with the external environment and valve means operatively associated to said third opening. The valve means of each tank are configured to automatically allow or prevent a flow of air to pass through said third opening, depending on the internal temperature of said tank.

According to the invention, the valve means of each tank:
- automatically switch in an open condition, at which they leave open said third opening to allow a flow of air to pass through said third opening, if the internal temperature of said tank is higher than a predefined threshold temperature value;
- automatically switch in a closed condition, at which they obstruct said third opening to prevent a flow of air to pass through said third opening, if the internal temperature of said tank is lower than or equal to said predefined threshold temperature value.

According to an aspect of the invention, said threshold temperature value is included in a temperature range between 80 °C and 110 C°.

According to an aspect of the invention, the valve means of each tank comprise at least a thermostatic valve.

Preferably, the breather device comprises a main valve assembly having a main port in fluid-dynamic communication with the second opening of each tank and adapted to be in fluid-dynamic communication with said expansion vessel. Said valve assembly is configured to allow or prevent a flow of air coming from the second opening of each tank to reach said main port. Preferably, each tank comprises first and second walls opposite to another and arranged in a proximal and distal position with respect to said main valve assembly.

According to an aspect of the invention, said first opening is arranged at the second wall of the corresponding tank and said third opening is arranged at the first wall of said tank.

According to some embodiments of the invention, said air demoisturizer unit includes a single tank.

According to other embodiments of the invention, said air demoisturizer unit includes a pair of tanks.

Preferably, said air demoisturizer unit comprises first sensing means configured to detect temperature in the internal volume of each tank.

Preferably, said air demoisturizer unit comprises second sensing means configured to detect a saturation level of the moisture absorbing substance accommodated in the internal volume of each tank.

Preferably, the breather device of the invention includes or it is operatively coupled with a power and control unit.

Preferably, the breather device of the invention comprises a protection enclosure arranged spaced from said air demoisturizer unit and at least partially surrounding said air demoisturizer unit in proximity of said main valve assembly.

In a further aspect, the present invention relates to a power electrical apparatus, according to the following claim 13 and the related dependent claims.

Further characteristics and advantages of the present invention will be more apparent with reference to the description given below and to the accompanying figures, provided purely for explanatory and non-limiting purposes, wherein:
- Fig. 1 schematically illustrates a power transformer including the breather device, according to the present invention;
- Figs. 2-3 schematically illustrate an embodiment of the breather device, according to the present invention;
- Figs. 4-5 schematically illustrate a further embodiment of the breather device, according to the present invention;
- Figs. 6-7 schematically illustrate a further embodiment of the breather device, according to the present invention;
- Figs. 8-9 schematically illustrate a further embodiment of the breather device, according to the present invention;
- Fig. 10 schematically illustrates operation of automatic valve means included in the breather device, according to the present invention.

With reference to the aforesaid figures, the breather device 1, according to the invention, will now be described in details.

In the following detailed description, identical components or elements are generally indicated by same reference numerals, regardless of whether they are shown in different embodiments. In order to clearly and concisely disclose the invention, the drawings may not necessarily be to scale and certain features of the invention may be shown in a schematic form.

For the sake of clarity, it is specified that, within the scope of the present invention, the expression "in fluid-dynamic communication" refers to some parts or components of the breather device of the invention has to be intended with reference to an operating condition, in which a fluid (e.g. insulating liquid or air) can flow between said parts (through suitable ducts or ports).

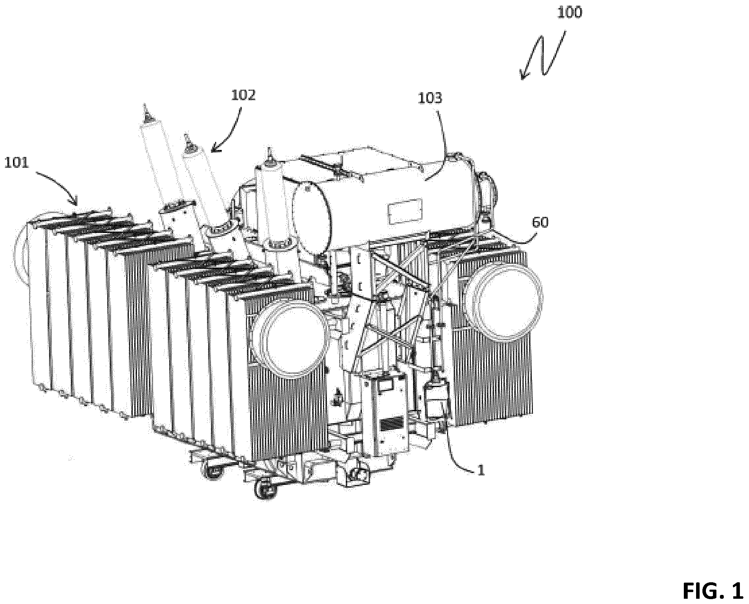

In figure 1, a power electrical apparatus 100 (in this case a power transformer) for electric power transmission and distribution installations (i.e. operating at voltages higher than 1 kV AC) is schematically shown.

The electrical apparatus 100 comprises a tank 101 filled with a liquid having cooling and electrical insulation properties, e.g. mineral, vegetal, ester or silicone oil (here referred to as "insulating liquid" for the sake of brevity).

Some components of the electrical apparatus 100 (e.g. a magnetic core and related windings) are accommodated within the tank 101 and are at least partially immersed in the insulating liquid. Other components of the electrical power apparatus 100, such as electric bushes 102, are fixed on an external wall of the tank 101.

The electrical apparatus 100 comprises an expansion vessel 103 (e.g. a conservator) formed by a container fixed on an external wall of the tank 101 and in fluid-dynamic communication with this latter through a suitable duct arrangement.

The expansion vessel 103 is basically aimed at allowing expansion of the insulating liquid contained in the tank 101 into its internal volume, depending on the operating conditions of said insulating liquid.

In normal conditions, the expansion vessel 103 is partially filled with insulating liquid and air. The expansion vessel 103 is in fluid-dynamic communication with the external environment in such a way to absorb or expel air from or to the atmosphere in response to the expansion or retraction of the insulating liquid into or from its internal volume.

In general, most of the components of the electrical power apparatus 100, including the expansion vessel 103, may be of known type and they will not be here described in further details for the sake of brevity.

The power electrical apparatus 100 comprises a breather device 1, according to the invention, which is in fluid-dynamic communication with the expansion vessel 103 through a duct 60.

In general, the breather device 1 is aimed at dehumidifying air to be supplied into the expansion vessel 103 of the power electrical apparatus 100.

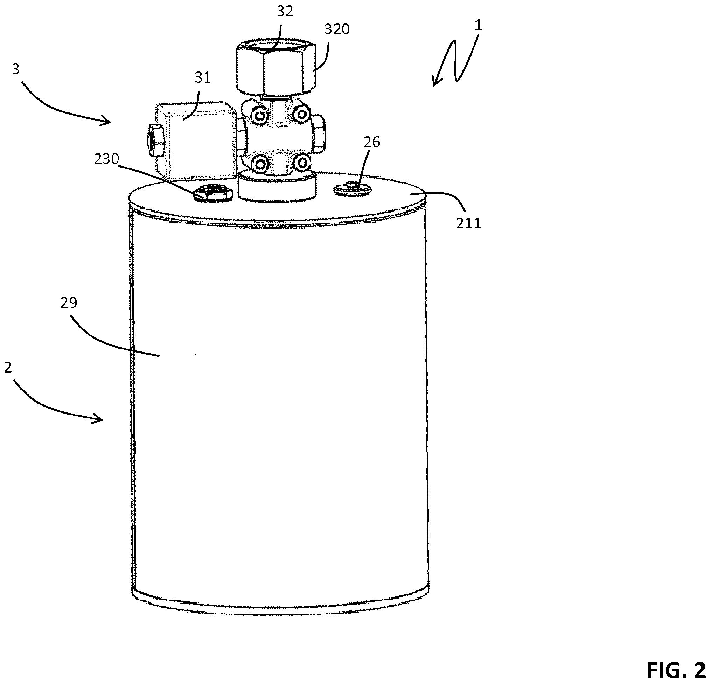

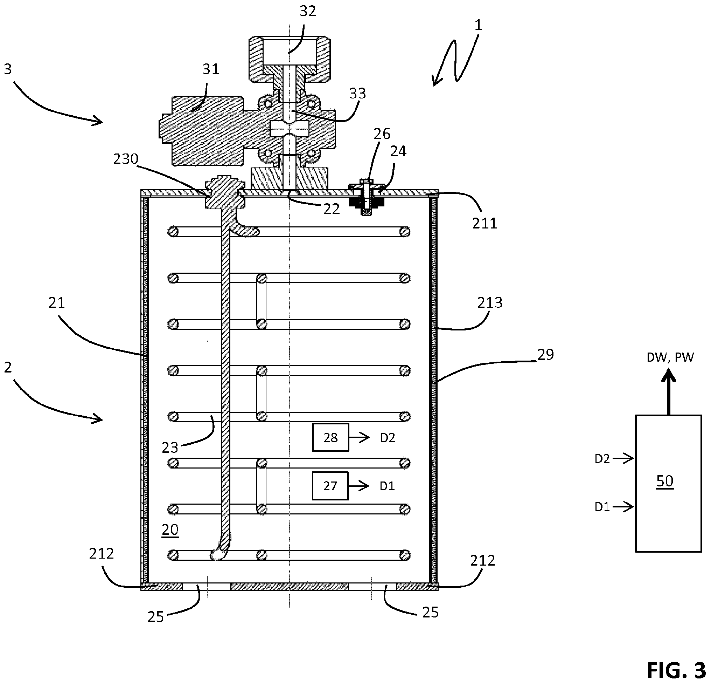

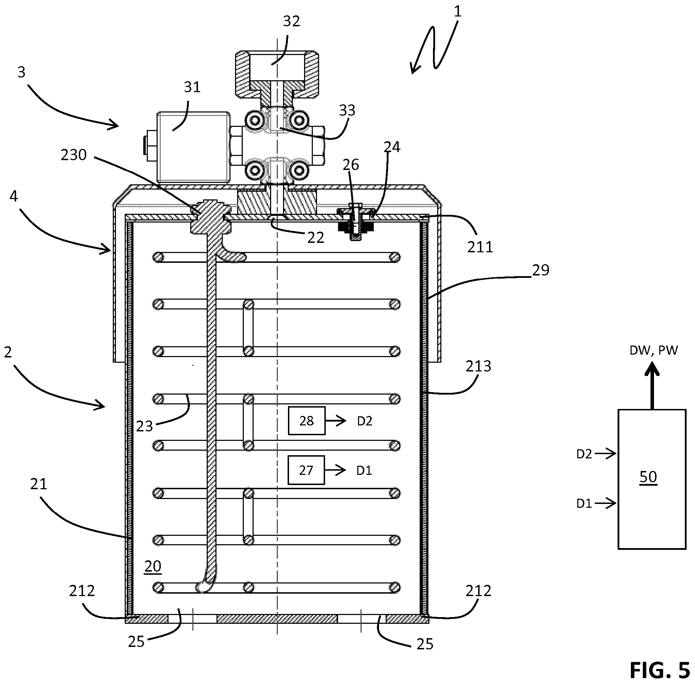

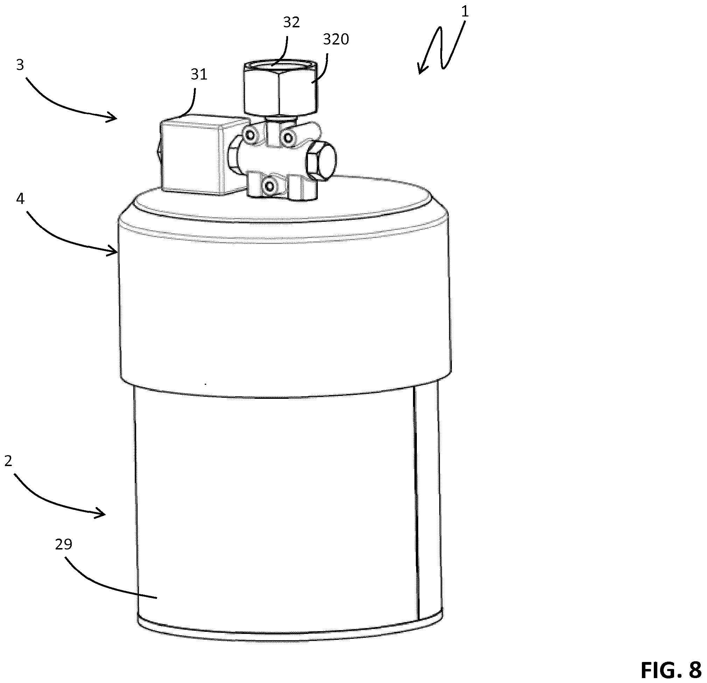

Referring to figures 2-8, the breather device 1 comprises an air demoisturizer unit 2. Preferably, the demoisturizer unit 2 comprises a main enclosure 29, e.g. having a substantially cylindrical geometry.

Within the enclosure 29, the demoisturizer unit 2 includes one or more tanks 21, each having an internal volume 20.

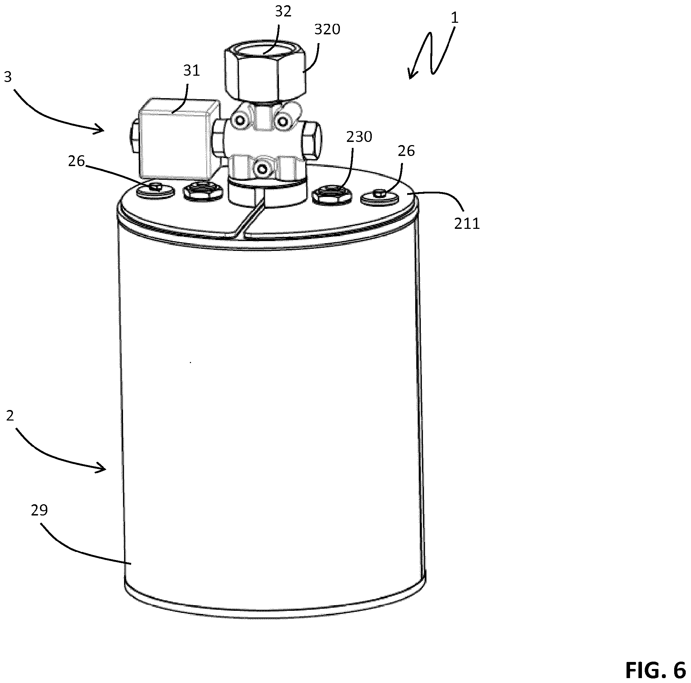

According to some embodiments of the invention (figures 2-5), the demoisturizer unit 2 includes a single tank 21, whereas, according to other embodiments of the invention (figures 6-9), the demoisturizer unit 2 includes a pair of tanks 21, preferably arranged side by side.

Each tank 21 generally comprises a plurality of walls defining its internal volume 20 and forming, at least partially, the walls of the main enclosure 29 of the demoisturizer unit 2.

Preferably, referring to a normal operative positioning of the breather device 1 (as shown in figure 1), each tank 21 comprises a first upper wall 211 and a second lower wall 212 opposite one to another and a third lateral wall 213 arranged between the first and second walls 211, 212. Preferably, the lateral wall 213 of each tank 21 includes or it is internally covered by a layer of thermo-insulating material.

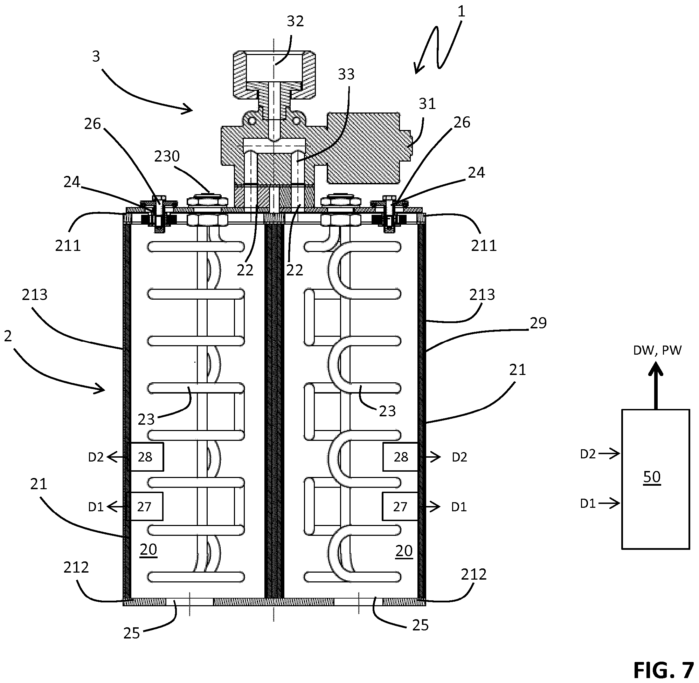

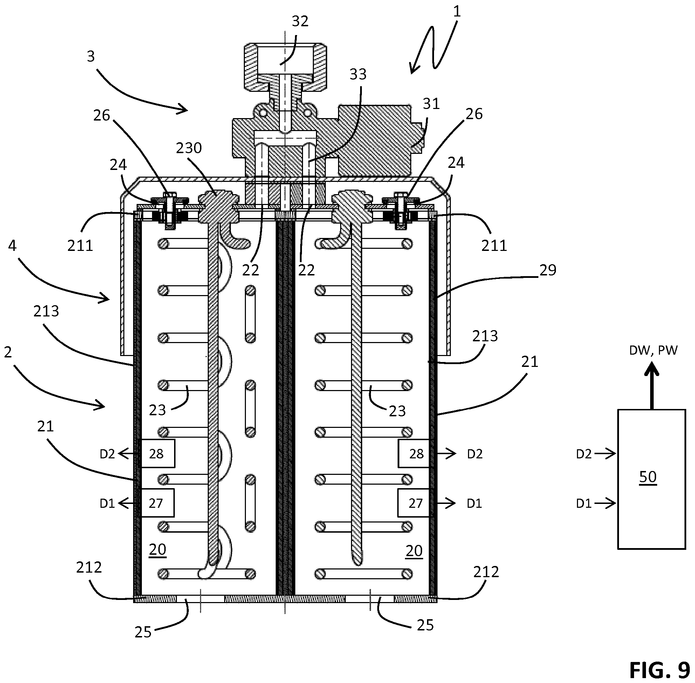

Preferably, when the demoisturizer unit 2 includes a pair of tanks 21, these latter may include a common portion of lateral wall as it is evident from figures 7 and 9.

According to the invention, each tank 21 comprises at least a first opening 25 configured to put the internal volume 20 of said tank in fluid-dynamic communication with the external environment.

Conveniently, each first opening 25 forms an inlet opening to allow air coming from the external atmosphere to enter into the internal volume 20 of the corresponding tank 21.

Preferably, each first opening 25 is arranged at the second lower wall 212 of the corresponding tank 21.

According to some embodiments of the invention (figures 6-9), each tank 21 includes a single fist opening 25 arranged at the second lower wall 212 of each tank 21, whereas, according to other embodiments of the invention (figures 2-5), each tank 21 includes a pair of fist openings 25 at the second lower wall 212 of a single tank 21.

Each tank 21 comprises at least a second opening 22 (preferably a single second opening) configured to allow a flow of dehumidified air to exit from the internal volume 20, during the normal operation of the breather device 1 (i.e. when this latter carries out its air drying functionalities).

Conveniently, each second opening 22 forms an outlet opening to allow dehumidified air to flow towards another section of the breather device 1 in fluid-dynamic communication with the expansion vessel 103.

Preferably, each second opening 22 is arranged at the first upper wall 211 of each tank 21, thereby in distal position from the above-mentioned one or more first openings 25.

Preferably, each tank 21 includes a single second opening 22 arranged at the first upper wall 211 of each tank 21.

According to the invention, the demoisturizer unit 2 comprises in the internal volume 20 of each tank 21 a regenerable moisture absorbing substance (not shown) and a heater 23 for regenerating said the moisture absorbing substance.

The above-mentioned moisture absorbing substance may be of known type, such as air-drying salts, e.g. silica gel.

Each heater 23 may be realized in a known manner as well. For example, it may be formed by a closed loop electrically resistive element (e.g. having a spiral-like shape) that has terminals electrically connectable to a power source.

According to some embodiments of the invention, each heater 23 may be equipped with suitable fin portions to increase the overall heat exchange surface.

Preferably, the heater 23 of each tank 21 is in direct contact with the regenerable moisture absorbing substance accommodated in said tank.

Preferably, the heater 23 of each tank 21 is fixed to the first upper wall 211 of said tank by means of suitable flange arrangements 230.

Preferably, the breather device 1 comprises a main valve assembly 3 having a main port 32 in fluid-dynamic communication with the second opening 22 of each tank 21 and adapted to be in fluid-dynamic communication with the expansion vessel 103 of the power electrical device 100. Preferably, the valve assembly 3 is operatively coupled with the air demoisturizer unit 2 in proximity of the upper wall 211 of each tank 21. Each tank 21 thus has the first upper wall 211 and the second lower wall 212 respectively in a proximal position and distal position with respect to the valve assembly 3.

Preferably, at the main port 32, the main valve assembly 3 comprises suitable mechanical means 320 (e.g. a flange arrangement) configured to mechanically connect with the duct 60 coupled with the expansion vessel 103.

Preferably, the main valve assembly 3 comprises suitable internal ducts 33 operatively coupling the second opening 22 of each tank 21 with the main port 32.

Conveniently, the main valve assembly 3 comprises first valve means 31 adapted to allow or prevent a flow of air coming from each tank 21 to reach the main port 32 and flow towards the expansion vessel 103.

Preferably, the first valve means 31 are operatively associated to each internal duct 33 operatively coupling the second opening 22 of each tank 21 with the main port 32 and they can selectively obstruct or leave open said internal duct.

Preferably, the first valve means 31 operate in response to suitable driving signals DW (e.g. suitable current signals) received in input.

During normal operation of each tank (i.e. when the air-drying process is carried out), the first valve means 31 leave open the internal duct 33 operatively coupling the second opening 22 of said tank with the main port 32. In this way, a flow of dehumified air coming from said tank can reach the main port 32 and flow towards the expansion vessel 103.

When the regeneration process of the moisture absorbing substance contained in a tank 21 has to be carried out, the first valve means 31 selectively obstruct the internal duct 33 operatively coupling the second opening 22 of said tank with the main port 32. In this way, air coming from said tank cannot reach the main port 32 anymore.

Preferably, the first valve means 31 comprises a solenoid valve arrangement capable of selectively obstructing or leave open each internal duct 33 operatively coupling the second opening 22 of each tank 21 with the main port 32.

In general, the main valve assembly 3 may be arranged according to solutions of known type, which are not described here in further details, for the sake of brevity.

An important aspect of the invention consists in that each tank 21 comprises at least a third opening 24 (preferably a single opening) in fluid-dynamic communication with the external environment and second valve means 26 operatively associated to said third opening.

In operation, the second valve means automatically allow or prevent a flow of air to pass through the third opening 24, depending on the internal temperature of the corresponding tank 21.

In particular, depending on the internal temperature of the corresponding tank 21, the second valve means 26 automatically switch in an open condition, at which they leave open the third opening 24 and allow a flow of air to pass through the third opening 24, or in a closed condition, at which they obstruct the third opening 24 and prevent a flow of air to pass through the third opening 24.

The second valve means 26 are configured to automatically switch in an open condition, if the internal temperature of the corresponding tank 21 is higher than a predefined threshold temperature value TH.

The second valve means 26 are configured to automatically switch in a closed condition, if the internal temperature of the tank is lower than or equal to the predefined threshold temperature value TH.

Preferably, the threshold temperature value TH is about the water boiling temperature. As an example, the threshold temperature value TH is included in a temperature range between 80 °C and 110C°.

Preferably, the third opening 24 and the corresponding valve means 26 are arranged on the first upper wall 211 of the corresponding tank 21, thereby in an opposite position with respect to the one or more first openings 25 of said tank.

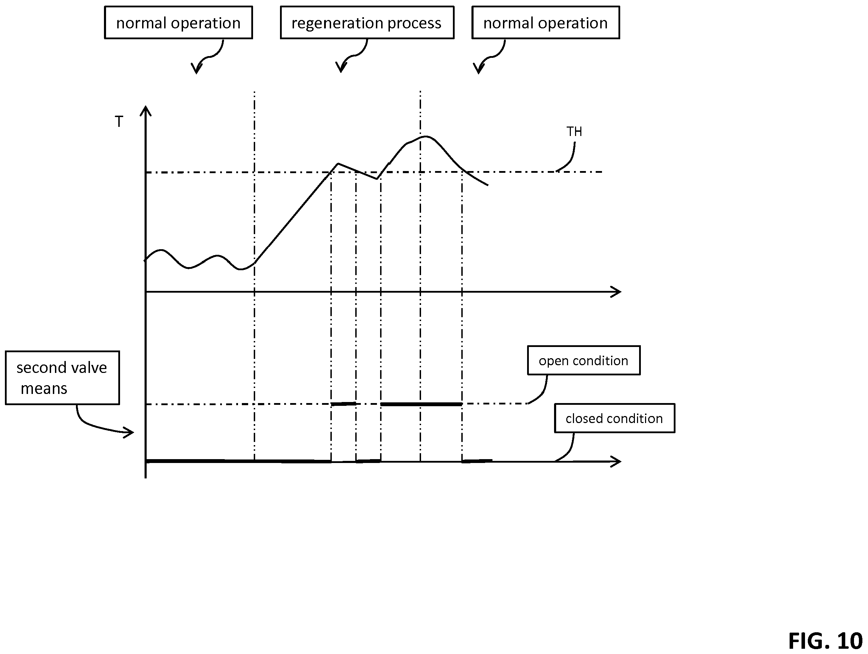

The operation of second valve means 26 for a generic tank 21, according to the above mentioned preferred embodiment, is briefly illustrated in the following (figure 10).

During normal operation, the valve means 26 are in a closed condition, since the internal temperature of the tank 21 substantially coincides with the environmental temperature. Air cannot pass through the third opening 24 of the tank 21. This allows optimizing the drying action carried out by the moisture absorbing substance contained in the tank 21 as air coming from the external environment must pass through the whole volume of said moisture absorbing substance before exiting from the tank 21 at the second opening 22.

During the regeneration process of the moisture absorbing substance contained in the tank 21, the valve means 26 initially remain in a closed condition as the internal temperature of the tank 21 is still relatively low, even if it progressively increases. In this way, the heating process of the moisture absorbing substance contained in the tank 21 is not slowed down by a passage of air through the third opening 24.

When the internal temperature of the tank 21 exceeds the predefined threshold temperature value TH, the valve means 26 switch in the above-mentioned open condition. In this way, water vapor formed during the regeneration process due to the high temperature levels can pass through the third opening 24 and exit from the tank 21.

The exit of the water vapor from the tank 21 may determine a decrease of the internal temperature of the tank. In this case, the valve means 26 automatically switch back in the above-mentioned closed condition, if the internal temperature of the tank 21 becomes lower than the predefined threshold temperature value TH. In this event, the valve means 26 will switch again in the above-mentioned closed condition, when the internal temperature of the tank 21 newly exceeds the predefined threshold temperature value TH.

Alternatively, if the internal temperature of the tank 21 always remains higher than the predefined threshold temperature value TH, the valve means 26 maintain said open condition. In practice, during the regeneration process of the moisture absorbing substance contained in the tank 21, after having switched in an open condition for the first time, the valve means 26 may alternatively switch in an automatic manner between said closed and open conditions or remain in said open condition.

When the regeneration process is completed, the valve means 26 automatically switch back in the above-mentioned closed condition, when the internal temperature of the tank 21 becomes lower than the predefined threshold temperature value TH.

Then, they will maintain said closed condition during normal operation of the tank 21. Preferably, the valve means 26 of each tank 21 include a thermostatic valve, e.g. of the type including a wax capsule or a bimetallic plate.

According to some embodiments of the invention, the air demoisturizer unit 2 comprises first sensing means 27 configured to detect temperature in the internal volume of each tank 21. Preferably, the temperature sensing means 27 comprises a temperature sensor (which may be of known type) accommodated in the internal volume 20 of each tank 21.

According to some embodiments of the invention, the air demoisturizer unit 2 comprises second sensing means 28 configured to detect a saturation level of the moisture absorbing substance accommodated in the internal volume 20 of each tank 21.

Preferably, the second sensing means 28 comprise a load cell sensor (which may be of known type) accommodated in the internal volume 20 of each tank 21.

According to preferred embodiments of the invention, the breather device 1 includes or it is operatively coupled to a power and control unit 50.

The power and control unit 50 is advantageously configured to provide diagnostic functionalities and control functionalities for properly managing the operating life of the breather device 1.

Preferably, the power and control unit 50 is operatively coupled to the first sensing means 27 to receive and process first detection signals D1 indicative of the temperature in the internal volume 20 of each tank 21.

Preferably, the power and control unit 50 is operatively coupled to the second sensing means 28 to receive and process second detection signals D2 indicative of the saturation level of the moisture absorbing substance accommodated in the internal volume 20 of each tank 21.

The power and control unit 50 is advantageously configured to provide driving functionalities of electromagnetic, electric and/or electronic equipment of the breather device 1.

Preferably, the power and control unit 50 is operatively coupled to the first valve means 32 to provide suitable driving signals DW to these latter.

Preferably, the power and control unit 50 is operatively coupled to the heaters 23 of the air demoisturizer unit 2 to provide suitable feeding signals PW to activate said heaters. Preferably, the power and control unit 50 comprises digital data processing resources (e.g. one or more microprocessors) and one or more power circuits to carry out its functionalities.

In general, the power and control unit 50 may be realized according to solutions of known type, which are not described here in further details, for the sake of brevity.

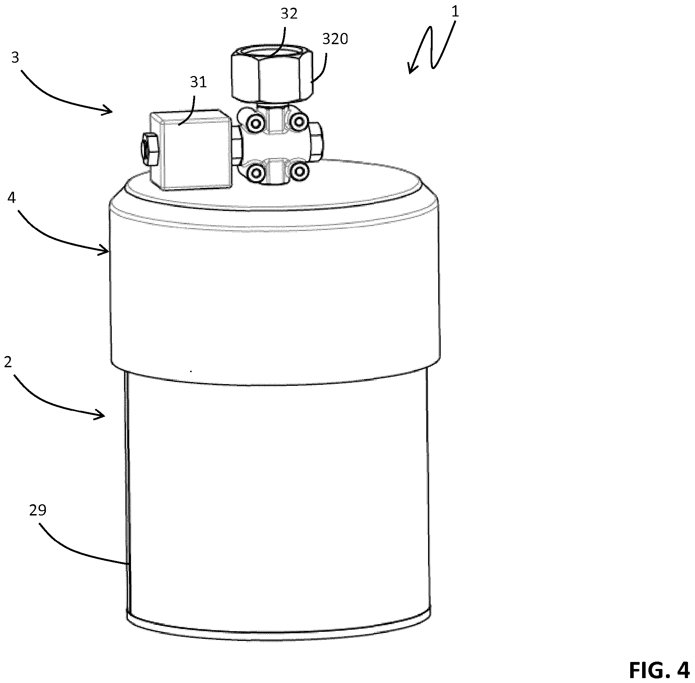

According to some embodiments of the invention (figures 4-5 and 8-9), the breather device 1 comprises a protection enclosure 4 arranged spaced from the air demoisturizer unit 2 and surrounding at least partially this latter in proximity of the main valve assembly 3. Conveniently, the protection enclosure 4 may be bell shaped and fixed to the main enclosure of the air demoisturizer unit 2 according to solutions of known type.

Preferably, air coming from the external environment can pass in the gap between the protection enclosure 4 and the air demoisturizer unit 2. In this way, moisture exiting from the internal volume 20 of each tank 21 through the third opening 24 during the regeneration process can suitably condensate on the internal surfaces of the protection enclosure 4.

The breather device 1, according to the invention, provides relevant advantages with respect to corresponding detection devices of the state of the art.

The arrangement of tanks 21 equipped with an additional opening 24 towards the external environment and temperature sensitive valve means 26 associated thereto allows optimizing the regeneration process of the moisture absorbing substance contained in said tanks.

Water vapor generated during the regeneration process can be effectively expelled from the tanks 21, which allows remarkably increasing quality of the regeneration process and reducing the time needed for carrying out this latter.

In this way, the moisture absorbing substance contained in each tank 21 can be exploited in an optimal manner to carry out the requested air-drying functionalities.

On the other hand, a relevant reduction of the regeneration time of the moisture absorbing substance facilitates the operating management of the breather device 1 and ensures an improve protection from water pollution of the insulating liquid contained in the expansion vessel 103. The breather device 1 has a simple and compact structure and it may be easily installed on the field, even for retrofitting purposes.

The breather device 1 can be easily manufactured at industrial level with production costs quite competitive with respect to traditional devices of the same type.

## Claims

1. A breather device (1) for dehumidifying air to be supplied into an expansion vessel (103) of a power electrical device (100), said breather device comprising an air demoisturizer unit (2) including one or more tanks (21), each tank having an internal volume (20) accommodating a regenerable moisture absorbing substance and a heater (23) for regenerating said moisture absorbing substance, at least a first opening (25) configured to put the internal volume of said tank in fluid-dynamic communication with the external environment and at least a second opening (22) configured to allow a flow of air to exit from the internal volume of said tank towards another section of said breather device, **characterised in that** each tank (21) comprises at least a third opening (24) in fluid-dynamic communication with the external environment and valve means (26) operatively associated to said third opening, said valve means (26) being configured to automatically allow or prevent a flow of air to pass through said third opening, depending on the internal temperature of said tank,
wherein said valve means (26) are configured to:
- automatically switch in an open condition, at which said valve means (26) leave open said third opening (24) to allow a flow of air to pass through said third opening, if the internal temperature of said tank is higher than a predefined threshold temperature value (TH);
- automatically switch in a closed condition, at which said valve means (26) obstruct said third opening (24) to prevent a flow of air to pass through said third opening, if the internal temperature of said tank is lower than or equal to said predefined threshold temperature value (TH).

2. Breather device, according to claim 1, **characterised in that** said threshold temperature value (TH) is included in a temperature range between 80 °C and 110 C°.

3. Breather device, according to one or more of the previous claims, **characterised in that** said valve means (26) comprise at least a thermostatic valve.

4. Breather device, according to one or more of the previous claims, **characterised in that** it comprises a main valve assembly (3) having a main port (32) in fluid-dynamic communication with the second opening (22) of each tank (21) and adapted to be in fluid-dynamic communication with said expansion vessel (103), said valve assembly being configured to allow or prevent a flow of air coming from the second opening (22) of each tank to reach said main port (32).

5. Breather device, according to claim 4, **characterised in that** each tank (21) comprises first and second walls (211, 212) opposite one to another and arranged in a proximal and distal position with respect to said main valve assembly (3), wherein said first opening (25) is arranged at said second wall and said third opening (24) is arranged at said first wall.

6. Breather device, according to one or more of the previous claims, **characterised in that** said air demoisturizer unit (2) includes a single tank (21).

7. Breather device, according to one or more of the claims from 1 to 5, **characterised in that** said air demoisturizer unit (2) includes a pair of tanks (21).

8. Breather device, according to one or more of the previous claims, **characterised in that** said air demoisturizer unit (2) comprises first sensing means (27) configured to detect temperature in the internal volume of each tank (21).

9. Breather device, according to claim 8, **characterised in that** said air demoisturizer unit (2) comprises second sensing means (28) configured to detect a saturation level of the moisture absorbing substance accommodated in the internal volume of each tank (21).

10. Breather device, according to one or more of the previous claims, **characterised in that** it includes or it is operatively coupled with a power and control unit (50).

11. Breather device, according to one or more of the previous claims, **characterised in that** it comprises a protection enclosure (4) arranged spaced from said air demoisturizer unit (2) and at least partially surrounding said air demoisturizer unit in proximity of said main valve assembly (3).

12. A power electrical apparatus (100) for electric power transmission and distribution installations **characterised in that** it comprises at least a breather device (1), according to one or more of the previous claims.

13. A power electrical apparatus, according to claim 12, **characterised in that** it is a power transformer.

## Patentansprüche

1. Entlüftungsvorrichtung (1) zum Entfeuchten von Luft, die einem Ausdehnungsgefäß (103) einer elektrischen Leistungsvorrichtung (100) zuzuführen ist, wobei die Entlüftungsvorrichtung eine Luftentfeuchtungseinheit (2) umfasst, die einen oder mehrere Tanks (21) einschließt, wobei jeder Tank ein Innenvolumen (20), das eine regenerierbare feuchtigkeitsabsorbierende Substanz aufnimmt, und ein Heizgerät (23) zum Regenerieren der feuchtigkeitsabsorbierenden Substanz, mindestens eine erste Öffnung (25), die dazu konfiguriert ist, das Innenvolumen des Tanks in fluiddynamische Verbindung mit der äußeren Umgebung zu bringen, und mindestens eine zweite Öffnung (22), die dazu konfiguriert ist, einen Luftstrom aus dem Innenvolumen des Tanks in einen anderen Abschnitt der Entlüftungsvorrichtung austreten zu lassen, aufweist, **dadurch gekennzeichnet, dass** jeder Tank (21) mindestens eine dritte Öffnung (24) in fluiddynamischer Verbindung mit der äußeren Umgebung und ein Ventilmittel (26), das wirksam mit der dritten Öffnung verbunden ist, umfasst, wobei das Ventilmittel (26) dazu konfiguriert ist, in Abhängigkeit von der Innentemperatur des Tanks einen Luftstrom durch die dritte Öffnung automatisch zuzulassen oder zu verhindern,
wobei das Ventilmittel (26) dazu konfiguriert ist:
- automatisch in einen offenen Zustand zu schalten, in dem das Ventilmittel (26) die dritte Öffnung (24) offen lässt, um einen Luftstrom durch die dritte Öffnung strömen zu lassen, wenn die Innentemperatur des Tanks höher als ein vordefinierter Temperaturschwellenwert (TH) ist;
- automatisch in einen geschlossenen Zustand zu schalten, in dem das Ventilmittel (26) die dritte Öffnung (24) versperrt, um einen Luftstrom durch die dritte Öffnung zu verhindern, wenn die Innentemperatur des Tanks niedriger als oder gleich wie der vordefinierte Temperaturschwellenwert (TH) ist.

2. Entlüftungsvorrichtung nach Anspruch 1, **dadurch gekennzeichnet, dass** der Temperaturschwellenwert (TH) in einem Temperaturbereich zwischen 80 °C und 110 °C liegt.

3. Entlüftungsvorrichtung nach einem oder mehreren der vorstehenden Ansprüche, **dadurch gekennzeichnet, dass** das Ventilmittel (26) mindestens ein Thermostatventil umfasst.

4. Entlüftungsvorrichtung nach einem oder mehreren der vorstehenden Ansprüche, **dadurch gekennzeichnet, dass** sie eine Hauptventilanordnung (3) umfasst, die einen Hauptanschluss (32) aufweist, der in fluiddynamischer Verbindung mit der zweiten Öffnung (22) jedes Tanks (21) steht und dazu angepasst ist, in fluiddynamischer Verbindung mit dem Ausdehnungsgefäß (103) zu stehen, wobei die Ventilanordnung dazu konfiguriert ist, zuzulassen oder zu verhindern, dass ein von der zweiten Öffnung (22) jedes Tanks kommender Luftstrom den Hauptanschluss (32) erreicht.

5. Entlüftungsvorrichtung nach Anspruch 4, **dadurch gekennzeichnet, dass** jeder Tank (21) eine erste und eine zweite Wand (211, 212) umfasst, die einander gegenüberliegen und an einer proximalen und distalen Position in Bezug auf die Hauptventilanordnung (3) angeordnet sind, wobei die erste Öffnung (25) an der zweiten Wand angeordnet ist und die dritte Öffnung (24) an der ersten Wand angeordnet ist.

6. Entlüftungsvorrichtung nach einem oder mehreren der vorstehenden Ansprüche, **dadurch gekennzeichnet, dass** die Luftentfeuchtungseinheit (2) einen einzelnen Tank (21) einschließt.

7. Entlüftungsvorrichtung nach einem oder mehreren der Ansprüche 1 bis 5, **dadurch gekennzeichnet, dass** die Luftentfeuchtungseinheit (2) ein Paar von Tanks (21) einschließt.

8. Entlüftungsvorrichtung nach einem oder mehreren der vorstehenden Ansprüche, **dadurch gekennzeichnet, dass** die Luftentfeuchtungseinheit (2) ein erstes Messmittel (27) umfasst, das dazu konfiguriert ist, eine Temperatur in dem Innenvolumen jedes Tanks (21) zu erfassen.

9. Entlüftungsvorrichtung nach Anspruch 8, **dadurch gekennzeichnet, dass** die Luftentfeuchtungseinheit (2) ein zweites Messmittel (28) umfasst, das dazu konfiguriert ist, einen Sättigungsgrad der feuchtigkeitsabsorbierenden Substanz zu erfassen, die in dem Innenvolumen jedes Tanks (21) aufgenommen ist.

10. Entlüftungsvorrichtung nach einem oder mehreren der vorstehenden Ansprüche, **dadurch gekennzeichnet, dass** sie eine Leistungs- und Steuereinheit (50) einschließt oder mit einer wirksam gekoppelt ist.

11. Entlüftungsvorrichtung nach einem oder mehreren der vorstehenden Ansprüche, **dadurch gekennzeichnet, dass** sie ein Schutzgehäuse (4) umfasst, das von der Luftentfeuchtungseinheit (2) beabstandet angeordnet ist und die Luftentfeuchtungseinheit in der Nähe der Hauptventilanordnung (3) zumindest teilweise umgibt.

12. Elektrische Leistungseinrichtung (100) für Anlagen zum Übertragen und Verteilen von elektrischer Leistung, **dadurch gekennzeichnet, dass** sie mindestens eine Entlüftungsvorrichtung (1) nach einem oder mehreren der vorstehenden Ansprüche umfasst.

13. Elektrische Leistungseinrichtung nach Anspruch 12, **dadurch gekennzeichnet, dass** sie ein Leistungstransformator ist.

## Revendications

1. Dispositif reniflard (1) permettant de déshumidifier de l'air devant être fourni dans un vase d'expansion (103) d'un dispositif électrique de puissance (100), ledit dispositif reniflard comprenant une unité d'assèchement d'air (2) incluant un ou plusieurs réservoirs (21), chaque réservoir présentant un volume interne (20) contenant une substance d'absorption d'humidité régénérable et un réchauffeur (23) permettant de régénérer ladite substance d'absorption d'humidité, au moins une première ouverture (25) configurée pour mettre le volume interne dudit réservoir en communication dynamique de fluide avec l'environnement externe et au moins une deuxième ouverture (22) configurée pour permettre à un écoulement d'air de sortir du volume interne dudit réservoir vers une autre section dudit dispositif reniflard, **caractérisé en ce que** chaque réservoir (21) comprend au moins une troisième ouverture (24) en communication dynamique de fluide avec l'environnement externe et des moyens de vannes (26) associés de manière fonctionnelle à ladite troisième ouverture, lesdits moyens de vannes (26) étant configurés pour automatiquement permettre à ou empêcher un écoulement d'air de passer à travers ladite troisième ouverture, en fonction de la température interne dudit réservoir,
dans lequel lesdits moyens de vannes (26) sont configurés pour :
- basculer automatiquement dans un état ouvert, dans lequel lesdits moyens de vannes (26) laissent ouverte ladite troisième ouverture (24) pour permettre à un écoulement d'air de passer à travers ladite troisième ouverture, si la température interne dudit réservoir est supérieure à une valeur de température seuil (TH) prédéfinie ;
- basculer automatiquement dans un état fermé, dans lequel lesdits moyens de vannes (26) obstruent ladite troisième ouverture (24) pour empêcher un écoulement d'air de passer à travers ladite troisième ouverture, si la température interne dudit réservoir est inférieure à ou égale à ladite valeur de température seuil (TH) prédéfinie.

2. Dispositif reniflard, selon la revendication 1, **caractérisé en ce que** ladite valeur de température seuil (TH) est incluse dans une plage de températures entre 80 °C et 110 °C.

3. Dispositif reniflard, selon une ou plusieurs des revendications précédentes, **caractérisé en ce que** lesdits moyens de vannes (26) comprennent au moins une vanne thermostatique.

4. Dispositif reniflard, selon une ou plusieurs des revendications précédentes, **caractérisé en ce qu'**il comprend un ensemble de vanne principal (3) présentant un orifice principal (32) en communication dynamique de fluide avec la deuxième ouverture (22) de chaque réservoir (21) et adapté pour être en communication dynamique de fluide avec ledit vase d'expansion (103), ledit ensemble vanne étant configuré pour permettre à ou empêcher un écoulement d'air venant de la deuxième ouverture (22) de chaque réservoir d'atteindre ledit orifice principal (32).

5. Dispositif reniflard, selon la revendication 4, **caractérisé en ce que** chaque réservoir (21) comprend des première et seconde parois (211, 212) opposées l'une à l'autre et agencées dans une position proximale et distale par rapport audit ensemble de vanne principal (3), dans lequel ladite première ouverture (25) est agencée au niveau de ladite seconde paroi et ladite troisième ouverture (24) est agencée au niveau de ladite première paroi.

6. Dispositif reniflard, selon une ou plusieurs des revendications précédentes, **caractérisé en ce que** ladite unité d'assèchement d'air (2) inclut un seul réservoir (21).

7. Dispositif reniflard, selon une ou plusieurs des revendications 1 à 5,
**caractérisé en ce que** ladite unité d'assèchement d'air (2) inclut une paire de réservoirs (21).

8. Dispositif reniflard, selon une ou plusieurs des revendications précédentes, **caractérisé en ce que** ladite unité d'assèchement d'air (2) comprend des premiers moyens de détection (27) configurés pour détecter une température dans le volume interne de chaque réservoir (21).

9. Dispositif reniflard, selon la revendication 8, **caractérisé en ce que** ladite unité d'assèchement d'air (2) comprend des seconds moyens de détection (28) configurés pour détecter un niveau de saturation de la substance d'absorption d'humidité contenue dans le volume interne de chaque réservoir (21).

10. Dispositif reniflard, selon une ou plusieurs des revendications précédentes, **caractérisé en ce qu'**il inclut ou qu'il est accouplé de manière fonctionnelle à une unité de puissance et de commande (50).

11. Dispositif reniflard, selon une ou plusieurs des revendications précédentes, **caractérisé en ce qu'**il comprend une enceinte de protection (4) agencée espacée de ladite unité d'assèchement d'air (2) et entourant au moins partiellement ladite unité d'assèchement d'air à proximité dudit ensemble de vanne principal (3).

12. Appareil électrique de puissance (100) pour des installations de transmission et de distribution de puissance électrique **caractérisé en ce qu'**il comprend au moins un dispositif reniflard (1), selon une ou plusieurs des revendications précédentes.

13. Appareil électrique de puissance, selon la revendication 12, **caractérisé en ce qu'**il est un transformateur de puissance.
